# EUROPÄISCHE PATENTSCHRIFT

(11) **EP 1 775 920 B1**
(45) Veröffentlichungstag und Bekanntmachung des Hinweises auf die Patenterteilung: **13.12.2017**
(21) Anmeldenummer: 06020805.5
(22) Anmeldetag: 04.10.2006
(51) Int. Cl.: H04M 1/247, H04M 1/725

(54) **Steuerung von über ein Telekommunikationsnetz bereitgestellten Diensten**
Control of services provided by a telecommunication network
Contrôle de services foournis par un réseaux de télécommunication

(30) Priorität: 14.10.2005 DE 102005049698; 02.11.2005 DE 102005052601
(43) Veröffentlichungstag der Anmeldung: 18.04.2007
(73) Patentinhaber: Vodafone Holding GmbH, 40213 Düsseldorf (DE)
(72) Erfinder: Pointon, Donald, Minato-Ku 106-0031 Tokyo (JP)
(74) Vertreter: Weisbrodt, Bernd

(56) Entgegenhaltungen:
- EP-A2- 1 107 099
- WO-A1-03/077102
- US-A1- 2003 035 521
- Anonym: "Das schnurlose digitale DECT-Telefon für bis zu 6 Mobilteile mit integriertem Anrufbeantworter", SIEMENS AG, 4. August 1999 (1999-08-04), XP002415796, Gefunden im Internet: URL:http://gigaset.com/medias/sys_master/g igaset2015_de.pdf [gefunden am 2007-01-19]

## Beschreibung

Die vorliegende Erfindung betrifft ein Verfahren zum Betreiben eines in einem Telekommunikationsnetz, vorzugsweise einem Mobilfunknetz, nutzbaren, eine Anzeigeeinrichtung zur optischen und/oder akustischen Wiedergabe von Informationen und wenigstens einer Eingabeeinrichtung zur Erfassung von Informationen aufweisenden Endgerätes, vorzugsweise mobilen Endgerätes, wobei über das Telekommunikationsnetz bereitgestellte Dienste mittels seitens der Eingabeeinrichtung erfolgende Eingaben steuerbar sind. Ferner betrifft die vorliegende Erfindung ein Endgerät, vorzugsweise ein mobiles Endgerät, zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, wobei über das Telekommunikationsnetz bereitgestellte Dienste mittels seitens der Eingabeeinrichtung erfolgende Eingaben steuerbar sind.

Derartige Verfahren und Endgeräte sind im Stand der Technik in zahlreichen Ausführungsformen und Ausgestaltungen bekannt, insbesondere von in digitalen zellularen Mobilfunknetzen nutzbaren Mobilfunktelefonen gemäß dem GSM- und/oder UMTS-Funknetzstandard (GSM: Globel System for Mobile Communications; UMTS: Universal Mobile Telecommunications System). In beziehungsweise über entsprechende Telekommunikationsnetze werden den jeweiligen Endgeräte nutzenden Teilnehmern dabei verschiedene Dienste angeboten, beispielsweise Auskunftsdienste, Bestelldienste, Gewinnspiele, Anrufbeantworter-funktionalitäten oder dergleichen Dienste, die von dem jeweiligen Nutzer des Endgerätes durch seitens der Eingabeeinrichtung der Endgeräte erfolgender Eingaben steuerbar sind. Dabei werden dem Dienstenutzer in der Regel Eingabemöglichkeiten zur Steuerung der Dienste mit Hilfe von teil- oder vollautomatisierten interaktiven natürlich sprachlichen Dialogen über Sprachdialogsysteme, sogenannte Voiceportals zur Verfügung gestellt.

Entsprechende Sprachdialogsysteme ermöglichen eine Sprachnavigation durch sogenanntes IVR (IVR: Interaktive Voice Response) zur Steuerung von inbeziehungsweise über Telekommunikationsnetze bereitgestellte Dienste. IVR ermöglicht dabei sowohl eine Spracherkennung zur Generierung von Steuereingaben als auch eine Nutzung von Mehrfrequenzwahlverfahren, insbesondere mittels Doppeltonmehrfrequenzwahlverfahren, sogenannten DTMF (DTMF: Dual Tone Multifrequency Dialing) zur Generierung von Eingaben zur Steuerung von Diensten. Entsprechende Systeme zur interaktiven Steuerung von Diensten sind beispielsweise seitens der DE 10 2004 004 276 A1 offenbart.

Bisher werden bei den bisher bekannten Dienstnutzungen dem Nutzer über das Sprachdialogsystem zur Navigation in beziehungsweise durch die Dienste die zur Steuerung der Dienste jeweils bereitgestellten Eingabemöglichkeiten angesagt. Der Nutzer entsprechender Dienste muss sich dabei die jeweils zur Verfügung stehenden Eingabemöglichkeiten zur Steuerung der Dienste merken und kann dann über eine entsprechende Eingabe seitens der Eingabeeinrichtung seines Endgerätes die entsprechend gewünschte Steuerung bewirken. Insbesondere aufgrund der gegebenen Notwendigkeit des nutzerseitigen Merkens beziehungsweise Behaltens von jeweils zur Verfügung stehenden Eingabemöglichkeiten zur Steuerung der Dienste im Rahmen der jeweiligen Nutzung ist deren Handhabung und/oder Bedienbarkeit insbesondere für ungeübte Nutzer unkomfortabel und schwierig. Dies führt in der Regel dazu, dass Nutzer von einer entsprechenden Dienstenutzung absehen. Der Erfindung liegt in Anbetracht dieses Standes der Technik die Aufgabe zugrunde, die Steuerung von über das Telekommunikationsnetz bereitgestellten Diensten unter Meidung der beschriebenen Nachteile zu verbessern, insbesondere derart, dass eine einfache, verständliche und weniger umständliche Bedien- beziehungsweise Handhabbarkeit einer Dienststeuerung gegeben ist, insbesondere für ungeübte Nutzer.

Zur technischen Lösung dieser Aufgabe wird mit der vorliegenden Erfindung ein Verfahren zum Betreiben eines in einem Telekommunikationsnetz, vorzugsweise einem Mobilfunknetz, nutzbaren, eine Anzeigeeinrichtung zur optischen und/oder akustischen Wiedergabe von Informationen und wenigstens einer Eingabeeinrichtung zur Erfassung von Informationen aufweisenden Endgerätes, vorzugsweise mobilen Endgerätes, wobei über das Telekommunikationsnetz bereitgestellte Dienste mittels seitens der Eingabeeinrichtung erfolgende Eingaben steuerbar sind, vorgeschlagen, bei dem zur Steuerung eines Dienste zur Verfügung stehende Eingabemöglichkeiten seitens der Anzeigeeinrichtung des Endgerätes und/oder seitens der Eingabeeinrichtung des Endgerätes optisch wiedergegeben werden.

Der Erfindung liegt die Erkenntnis zugrunde, dass eine vereinfachte und insbesondere nutzerfreundliche Steuerung von Diensten ermöglicht wird, wenn die jeweils zur Verfügung stehenden Eingabemöglichkeiten eines Dienstes seitens der Anzeigeeinrichtung des Endgerätes und/oder seitens der Eingabeeinrichtung des Endgerätes optisch wiedergegeben werden, insbesondere da der Nutzer sich dann die jeweils zur Verfügung stehenden Eingabemöglichkeiten zur Steuerung eines Dienstes nicht merken muss und eine intuitive Bedienung beziehungsweise Betätigung der Eingabeeinrichtung ermöglicht wird, insbesondere wenn die jeweils mögliche Bedienungs- beziehungsweise Betätigungseingabe seitens der jeweiligen Eingabeeinrichtung wiedergegeben wird.

Vorteilhafterweise werden die zur Steuerung des Dienstes zur Verfügung stehenden Eingabemöglichkeiten dem Endgerät über das Telekommunikationsnetz mitgeteilt und entsprechend seitens der Anzeigeeinrichtung des Endgerätes und/oder seitens der Eingabeeinrichtung des Endgerätes wiedergegeben. Vorteilhafterweise werden die zur Steuerung des Dienstes zur Verfügung stehenden Eingabemöglichkeiten dem Endgerät in Form von Informationen zur Steuerung der Anzeigeinrichtung des Endgerätes und/oder zur Steuerung der Eingabeeinrichtung des Endgerätes oder in Form von zur Steuerung der Anzeigeeinrichtung des Endgerätes und/oder zur Steuerung der Eingabeeinrichtung des Endgerätes nutzbaren und/oder umsetzbaren Informationen mitgeteilt. Vorteilhafterweise müssen so dem Endgerät lediglich Informationen über das Telekommunikationsnetz übertragen werden, welche seitens des Endgerätes in eine entsprechende Wiedergabe seitens der Anzeigeeinrichtung und/oder der Eingabeeinrichtung umgesetzt werden. Erfindungsgemäß müssen so über das Telekommunikationsnetz lediglich Informationen übertragen werden, welche seitens des jeweiligen Endgerätes in eine optische Wiedergabe der zur Verfügung stehenden Eingabemöglichkeiten umgesetzt werden. Erfindungsgemäß ist so das Telekommunikationsnetz hinsichtlich der übertragenen Informationen entlastbar.

In einer weiteren vorteilhaften Ausgestaltung der Erfindung erfolgt eine Eingabe zur Steuerung des Dienstes durch Betätigung wenigstens einer Taste der Eingabeeinrichtung des Endgerätes und wird die Taste der Eingabeeinrichtung des Endgerätes zur optischen Wiedergabe der zur Verfügung stehenden Eingabemöglichkeiten seitens der Anzeigeinrichtung des Endgerätes und/oder seitens der Eingabeeinrichtung des Endgerätes optisch wiedergegeben. Vorteilhafterweise erfolgt die Wiedergabe der Taste seitens der Anzeigeeinrichtung des Endgerätes in einer der Form, der Farbe und/oder der Position der Taste seitens der Anzeigeeinrichtung des Endgerätes korrespondierenden Form. Dadurch wird die Steuerbarkeit der zur Verfügung stehenden Dienste für den Nutzer weiter vereinfacht, insbesondere da die zur Steuerung des Dienstes durch Betätigung möglichen Tasten dem Nutzer in einer intuitiven und direkt nutzbaren Form seitens der Anzeigeeinrichtung optisch wiedergegeben werden.

Eine weitere besonders vorteilhafte Ausgestaltung der Erfindung sieht vor, dass die wenigstens eine Taste zur optischen Wiedergabe der Bedienungs- und/oder Betätigungsfunktionalität ausgebildet ist. Dazu ist die wenigstens eine Taste vorteilhafterweise beleuchtbar ausgebildet, vorzugsweise farbig beleuchtbar, besonders bevorzugt in Abhängigkeit der jeweiligen Bedienungs- und/oder Betätigungsfunktionalität unterschiedlich farbig beleuchtbar. Eine weitere besonders vorteilhafte Ausgestaltung der Erfindung sieht vor, dass die wenigstens eine Taste eine Anzeigeeinrichtung aufweist, vorteilhafterweise eine Flüssigkristallanzeige (LCD), in welcher die jeweilige Bedienungs- und/oder Betätigungsfunktionalität wiedergebbar ist.

Eine besonders vorteilhafte Ausgestaltung der Erfindung sieht vor, dass die wenigstens eine eine Eingabe zur Steuerung des Dienstes durch Betätigung ermöglichende Taste der Eingabeeinrichtung des Endgerätes von einer zumindest teilweise berührungssensitiven Anzeigeeinrichtung, einem sogenannten Touchscreen, des Endgerätes ausgebildet wird. In einer bevorzugten Ausgestaltung der Erfindung ist die berührungssensitive Anzeigeeinrichtung (Touchscreen) des Endgerätes zumindest teilweise Bestandteil der Anzeigeeinrichtung des Endgerätes zur optischen Wiedergabe von Informationen. Durch die Nutzung einer berührungssensitiven Anzeigeeinrichtung (Touchscreen) des Endgerätes als Eingabeeinrichtung zur Steuerung des Dienstes ist eine weitere Verbesserung der Bedienung und/oder Handhabung zur Steuerung des Dienstes durch den Nutzer erzielbar, insbesondere da dieser entsprechend der gewünschten Steuerung die notwendige Eingabe direkt seitens der berührungssensitiven Anzeigeeinrichtung (Touchscreen) vornehmen kann.

In einer weiteren vorteilhaften Ausgestaltung der Erfindung ist die Bedienungs- und/oder Betätigungsfunktionalität der Eingabeeinrichtung des Endgerätes und/oder der Anzeigeeinrichtung des Endgerätes seitens des Endgerätes einstellbar, vorzugsweise nutzerindividuell. So kann der Nutzer eines erfindungsgemäßen Endgerätes die zur Steuerung des Dienstes möglichen Bedienungs- und/oder Betätigungsfunktionalitäten vorteilhafterweise entsprechend seinen Nutzungsvorlieben und/oder -häufigkeiten selbst vorgeben. In einer weiteren Ausgestaltung der Erfindung sind zur Steuerung des Dienstes mögliche Bedienungs- und/oder Betätigungsfunktionalitäten in beziehungsweise über entsprechende seitens des mobilen Endgerätes erfasster beziehungsweise vorgegebener Menüführungen und/oder -zusammenstellungen nutzerindividuell auswählbar.

In einer weiteren vorteilhaften Ausgestaltung der Erfindung erfolgt die Steuerung des Dienstes mittels eines Mehrfrequenzwahlverfahrens (MFV), vorzugsweise mittels eines Doppeltonfrequenzwahlverfahrens, vorzugsweise mittels DTMF (DTMF: Dual Tone Multi-Frequency).

In einer weiteren vorteilhaften Ausgestaltung der Erfindung ist der Dienst ein Sprachdialogsystem, vorzugsweise ein sogenanntes IVR-System (IVR: Interactiv Voice Response), nutzend ausgebildet.

In einer weiteren vorteilhaften Ausgestaltung der Erfindung ist der Dienst ein Dienst zur Nutzung und/oder Verwaltung von Sprachnachrichten, insbesondere sogenannten Voicemail-Anwendungen, insbesondere hinsichtlich der Nutzung von Anrufbeantworterfunktionalitäten.

Mit der Erfindung wird ferner ein Endgerät, vorzugsweise ein mobiles Endgerät, zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung von Erfassung von Informationen, wobei über das Telekommunikationsnetz bereitgestellte Dienste mittels seitens der Eingabeeinrichtung erfolgender Eingaben steuerbar sind, vorgeschlagen, bei dem zur Steuerung eines Dienstes zur Verfügung stehende Eingabemöglichkeiten seitens der Anzeigeeinrichtung und/oder seitens der Eingabeeinrichtung optisch wiedergebbar sind.

Vorteilhafterweise sind die zur Steuerung des Dienstes zur Verfügung stehenden Eingabemöglichkeiten dem Endgerät über das Telekommunikationsnetz mitteilbar und entsprechend seitens der Anzeigeeinrichtung wiedergebbar. Vorteilhafterweise sind die zur Steuerung des Dienstes zur Verfügung stehenden Eingabemöglichkeiten dem Endgerät in Form von Informationen zur Steuerung der Anzeigeeinrichtung und/oder zur Steuerung der Eingabeeinrichtung oder in Form von zur Steuerung der Anzeigeeinrichtung und/oder zur Steuerung der Eingabeeinrichtung nutzbaren und/oder umsetzbaren Informationen mitteilbar.

In einer weiteren vorteilhaften Ausgestaltung der Erfindung ist eine Eingabe zur Steuerung des Dienstes durch Betätigung wenigstens einer Taste der Eingabeeinrichtung vornehmbar und ist die Taste der Eingabeeinrichtung zur optischen Wiedergabe der zur Verfügung stehenden Eingabemöglichkeiten seitens der Anzeigeinrichtung und/oder seitens der Eingabeeinrichtung optisch wiedergebbar. Vorteilhafterweise erfolgt die Wiedergabe der Taste seitens der Anzeigeeinrichtung in einer der Form, der Farbe und/oder der Position der Taste seitens der Eingabeeinrichtung korrespondierenden Form.

In einer weiteren Ausgestaltung der Erfindung ist die wenigstens eine Taste zur optischen Wiedergabe der Bedienungs- und/oder Betätigungsfunktionalität ausgebildet. Dazu ist die wenigstens eine Taste vorteilhafterweise beleuchtbar ausgebildet, vorzugsweise farbig beleuchtbar, besonders bevorzugt in Abhängigkeit der jeweiligen Bedienungs- und/oder Betätigungsfunktionalität unterschiedlich farbig beleuchtbar. Eine weitere besonders vorteilhafte Ausgestaltung der Erfindung sieht vor, dass die wenigstens eine Taste eine Anzeigeeinrichtung aufweist, vorteilhafterweise eine Flüssigkristallanzeige (LCD), in welcher die jeweilige Bedienungs- und/oder Betätigungsfunktionalität wiedergebbar ist.

In einer besonderes bevorzugten Ausgestaltung der Erfindung ist die wenigstens eine eine Eingabe zur Steuerung des Dienstes durch Betätigung ermöglichende Taste der Eingabeeinrichtung von einer zumindest teilweise berührungssensitiven Anzeigeeinrichtung (Touchscreen) ausgebildet. Vorteilhafterweise ist die berührungssensitive Anzeigeeinrichtung (Touchscreen) zumindest teilweise Bestandteil der Anzeigeeinrichtung zur optischen Wiedergabe von Informationen.

Vorteilhafterweise ist die Bedienungs- und/oder Betätigungsfunktionalität der Eingabeeinrichtung des Endgerätes und/oder der Anzeigeeinrichtung des Endgerätes seitens des Endgerätes einstellbar, vorzugsweise nutzerindividuell. In einer weiteren Ausgestaltung der Erfindung sind zur Steuerung des Dienstes mögliche Bedienungs- und/oder Betätigungsfunktionalitäten in beziehungsweise über entsprechende seitens des mobilen Endgerätes erfasster beziehungsweise vorgegebener Menüführungen und/oder -zusammenstellungen nutzerindividuell auswählbar.

Eine weitere Ausgestaltung der Erfindung sieht vor, dass die Steuerung des Dienstes mittels eines Mehrfrequenzwahlverfahrens (MFV) erfolgt, vorzugsweise mittels eines Doppeltonmehrfrequenzwahlverfahrens (DTMF).

Vorteilhafterweise ist das erfindungsgemäße Endgerät zur Ausführung eines erfindungsgemäßen Verfahrens ausgebildet.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer schematischen Draufsicht ein erfindungsgemäßes mobiles Endgerät mit einer erfindungsgemäßen Dienststeuerung;
- Fig. 2: in einer schematischen Draufsicht ein weiteres mobiles Endgerät mit einer erfindungsgemäßen Dienststeuerung und
- Fig. 3: in einer schematischen Draufsicht ein weiteres mobiles Endgerät mit einer erfindungsgemäßen Dienststeuerung.

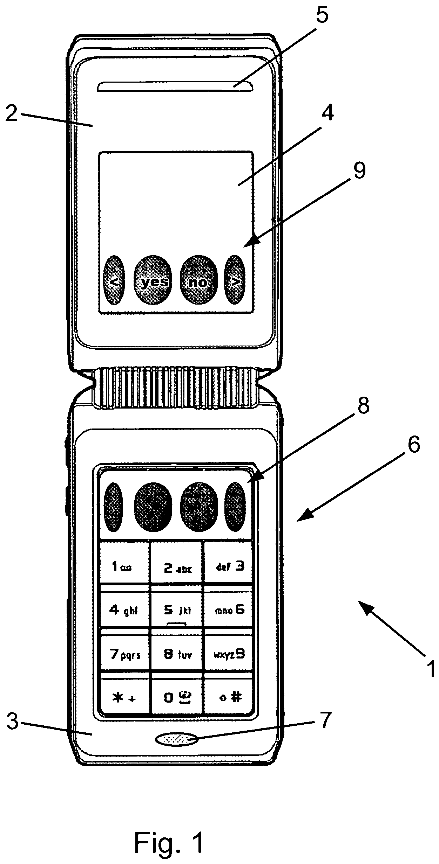

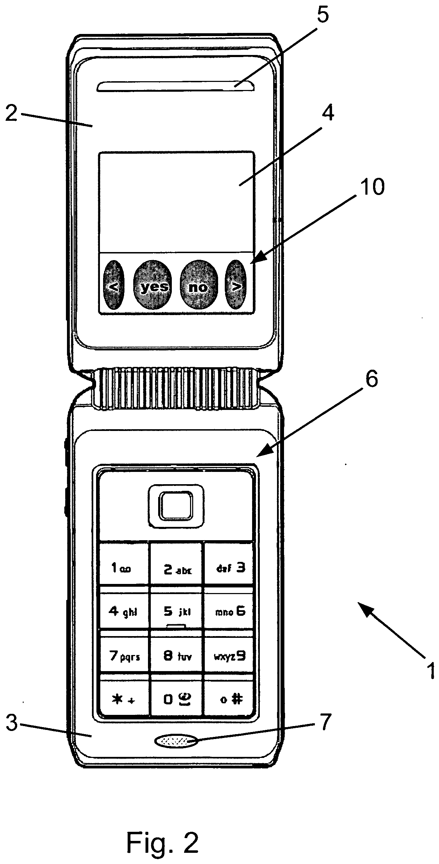

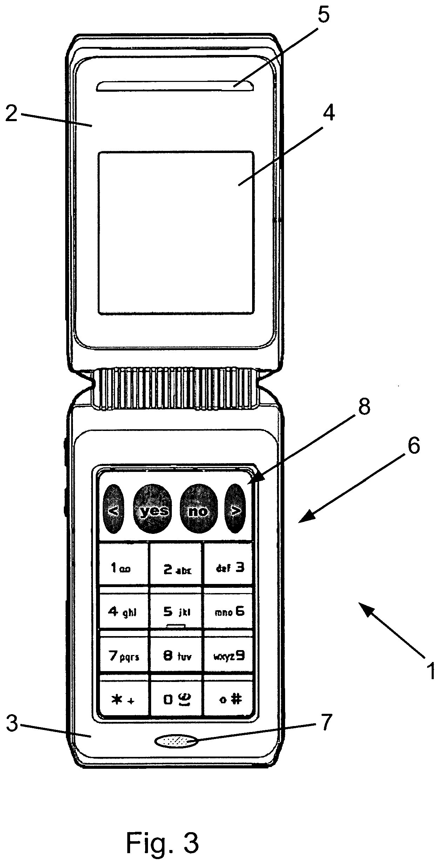

Die Fig. 1, 2 und 3 zeigen jeweils ein in einem Mobilfunknetz betreibbares mobiles Endgerät 1, vorliegend ein Mobilfunktelefon. Bei dem Mobilfunktelefon 1 handelt es sich um ein sogenanntes klappbares Mobilfunktelefon 1, welches ein aus zwei durch Verschwenken gegeneinander beziehungsweise umeinander relativ zueinander anordbaren Gehäuseteilen 2 und 3 bestehendes Gehäuse aufweist. Das Gehäuseteil 2 des Gehäuses des Mobilfunktelefons 1 weist auf der dem Gehäuseteil 3 im Rahmen der Verschwenkung zugewandten Seite als Mittels 4 und 5 zur Wiedergabe von akustischen und/oder optischen Information ein Display 4 als Anzeigeinrichtung und ein Lautsprecher beziehungsweise eine Hörmuschel 5 zur akustischen Wiedergabe von Audiosignalen auf, wie anhand von Fig. 1, 2 und 3 ersichtlich. Das Gehäuseteil 3 des Gehäuses des Mobilfunktelefons 1 weist auf der dem Gehäuseteil 2 im Rahmen der Verschwenkung zugewandten Seite als Mittel 6 und 7 zur Erfassung von akustischen und/oder optischen Informationen eine mehrere Tasten aufweisende Tastatur 6 beziehungsweise 6 und 8 als Eingabeeinrichtung und ein Mikrofon 7 zur Erfassung akustischer Signale auf, wie anhand der Fig. 1, Fig. 2 beziehungsweise Fig. 3 ersichtlich.

Bei dem in Fig. 1 dargestellten Mobilfunktelefon 1 weist die als Eingabeeinrichtung 6 dienende Tastatur in einem oberen Bereich 4 in Fig. 1 mit dem Bezugszeichen 8 gekennzeichnete Tasten auf, welche zur Steuerung eines über das Telekommunikationsnetz bereitgestellten Dienstes durch entsprechende Tastenbetätigung nutzbar sind. Dienstseitig wird dabei ein sogenanntes Voiceportal genutzt, welches IVR (IVR: Interactive Voice Response) zur Sprachnavigation zur Steuerung der Dienste einsetzt. Die im Rahmen des jeweiligen Dienstes zur Steuerung desselben zur Verfügung stehenden Eingabemöglichkeiten werden bei dem in Fig. 1 dargestellten Ausführungsbeispiel dem Nutzer des Mobilfunktelefons 1 seitens der als Display 4 ausgebildeten Anzeigeinrichtung 4 in einer der Form, der Farbe und/oder der Position der Tasten 8 seitens der Eingabeeinrichtung 6 korrespondierenden Form wiedergegeben. Zusätzlich wird seitens der in der Anzeigeeinrichtung 4 optisch wiedergegebenen Eingabemöglichkeiten zur Steuerung eines Dienstes die den jeweiligen Tasten 8 im Rahmen der Nutzung des Dienstes zugeordneten Steuerfunktionalitäten angezeigt, vorliegend in dem mit dem Bezugszeichen 9 gekennzeichneten Bereich. Bei dem in Fig. 1 dargestellten Ausführungsbeispiel sind dies Funktionen Rücklauf "<", Nachricht speichern "Yes", "No" und nächste Nachricht beziehungsweise Vorlauf ">". Die zur entsprechenden Steuerung der Anzeigeeinrichtung notwendigen Informationen werden dem Mobilfunktelefon 1 über das Mobilfunknetz im Rahmen der Nutzung des Dienstes übertragen und seitens des Mobilfunktelefons 1 entsprechend zur Umsetzung in optische Informationen seitens der Anzeigeeinrichtung umgesetzt.

Bei dem in Fig. 2 dargestellten Ausführungsbeispiel ist das als Anzeigeeinrichtung dienende Display 4 zumindest in dem mit 10 gekennzeichneten Bereich als sogenanntes Touchscreen ausgebildet. Im Bereich 10 der Anzeigeeinrichtung 4, also in dem als Touchscreen nutzbaren Bereich 10 der Anzeigeeinrichtung 4, werden die zur Steuerung eines Dienstes zur Verfügung stehenden Eingabemöglichkeiten optisch wiedergegeben. Bei dem in Fig. 2 dargestellten Ausführungsbeispiel sind dies die Funktionen Rücklauf "<", Nachricht speichern "Yes", "No" und nächste Nachricht beziehungsweise Vorlauf ">" einer Anrufbeantworterfunktionalität als Dienst des Mobilfunknetzes. Diese entsprechenden Eingabemöglichkeiten zur Steuerung des Dienstes kann der Nutzer des Mobilfunketelefons 1 durch entsprechende Berührung der die Tasten nachbildenden Bereiche seitens des Anzeigebereichs 10 aktivieren beziehungsweise auswählen.

Bei dem in Fig. 3 dargestellten Ausführungsbeispiel weisen die Tasten 8 der Eingabeeinrichtung 6 jeweils eine Flüssigkristallanzeige (LCD) auf. Seitens der Flüssigkristallanzeige (LCD) werden dem Nutzer dabei werden die zur Steuerung eines Dienstes zur Verfügung stehenden Eingabemöglichkeiten optisch wiedergegeben. Bei dem in Fig. 3 dargestellten Ausführungsbeispiel sind dies die Funktionen Rücklauf "<", Nachricht speichern "Yes", "No" und nächste Nachricht beziehungsweise Vorlauf ">" einer Anrufbeantworterfunktionalität als Dienst des Mobilfunknetzes. Durch Betätigung der Tasten 8 der Eingabeeinrichtung 6 werden die entsprechenden Steuerungen des Dienstes dann aktiviert.

Die in den Fig. der Zeichnung dargestellten Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Gehäuseteil (mobiles Endgerät (1))
- 3: Gehäuseteil (mobiles Endgerät (1))
- 4: Anzeigeeinrichtung/Display (Gehäuseteil (2))
- 5: Lautsprecher/Hörmuschel (Gehäuseteil (2))
- 6: Eingabeeinrichtung/Tastatur (Gehäuseteil (3))
- 7: Eingabeeinrichtung/Mikrofon (Gehäuseteil (3))
- 8: Funktionstasten (Eingabeeinrichtung (6))
- 9: Anzeigebereich Funktionstasten (Anzeigeeinrichtung (4))
- 10: Eingabeeinrichtung/Anzeigeeinrichtung (Touchscreen)

## Patentansprüche

1. Verfahren zum Betreiben eines in einem Telekommunikationsnetz nutzbaren, eine Anzeigeeinrichtung (4, 5, 9, 10) zur optischen und/oder akustischen Wiedergabe von Informationen und wenigstens eine Eingabeeinrichtung (6, 7, 8, 10) zur Erfassung von Informationen aufweisenden mobilen Endgerätes (1), wobei über das Telekommunikationsnetz bereitgestellte Dienste mittels seitens der Eingabeeinrichtung (6, 7, 8, 10) erfolgende Eingaben steuerbar sind,
**dadurch gekennzeichnet,**
**dass** zur Steuerung eines Dienstes zur Verfügung stehende Eingabemöglichkeiten seitens der Anzeigeeinrichtung (4, 10) des Endgerätes (1) und/oder seitens der Eingabeeinrichtung (6, 8) des Endgerätes (1) optisch wiedergegeben werden,
**und dass eine Eingabe zur Steuerung des Dienstes durch Betätigung wenigstens einer Taste (8, 10) der Eingabeeinrichtung (6, 8, 10) des Endgerätes (1) erfolgt und die Taste (8, 10) der Eingabeeinrichtung (6, 8, 10) des Endgerätes (1) zur optischen Wiedergabe der zur Verfügung stehenden Eingabemöglichkeiten seitens der Anzeigeeinrichtung (4, 10) des Endgerätes (1) und/oder seitens der Eingabeeinrichtung (6, 8) des Endgerätes (1) optisch wiedergegeben wird.**

2. Verfahren nach Anspruch 1, **dadurch gekennzeichnet, dass** die zur Steuerung des Dienstes zur Verfügung stehenden Eingabemöglichkeiten dem Endgerät (1) über das Telekommunikationsnetz mitgeteilt und entsprechend seitens der Anzeigeeinrichtung (4, 10) des Endgerätes (1) und/oder seitens der Eingabeeinrichtung (6, 8) des Endgerätes (1) wiedergegeben werden.

3. Verfahren nach Anspruch 2, **dadurch gekennzeichnet, dass** die zur Steuerung des Dienstes zur Verfügung stehenden Eingabemöglichkeiten dem Endgerät (1) in Form von Informationen zur Steuerung der Anzeigeeinrichtung (4, 10) des Endgerätes (1) und/oder zur Steuerung der Eingabeeinrichtung (6, 8) des Endgerätes (1) oder in Form von zur Steuerung der Anzeigeeinrichtung (4, 10) des Endgerätes (1) und/oder der Eingabeeinrichtung (6, 8) des Endgerätes (1) nutzbaren und/oder umsetzbaren Informationen mitgeteilt werden.

4. Verfahren nach einem der Ansprüche 1 bis **3, dadurch gekennzeichnet, dass** die Steuerung des Dienstes mittels eines Mehrfrequenzwahlverfahrens ("MFV") erfolgt.

5. Verfahren nach einem der Ansprüche 1 bis **4, dadurch gekennzeichnet, dass** der Dienst ein Sprachdialogsystem ("IVR") nutzend ausgebildet ist.

6. Verfahren nach einem der Ansprüche 1 bis **5, dadurch gekennzeichnet, dass** der Dienst ein Dienst zur Nutzung und/oder Verwaltung von Sprachnachrichten ist.

7. **Mobiles** Endgerät (1) zur Nutzung in einem Telekommunikationsnetz, mit einer Anzeigeeinrichtung (4, 5, 10) zur optischen und/oder akustischen Wiedergabe von Informationen und wenigstens einer Eingabeeinrichtung (6, 7, 8, 10) zur Erfassung von Informationen, wobei über das Telekommunikationsnetz bereitgestellte Dienste mittels seitens der Eingabeeinrichtung (6, 7, 8, 10) erfolgende Eingaben steuerbar sind,
**dadurch gekennzeichnet,**
**dass** zur Steuerung eines Dienstes zur Verfügung stehende Eingabemöglichkeiten seitens der Anzeigeeinrichtung (4, 10) und/oder seitens der Eingabeeinrichtung (6, 8) optisch wiedergebbar sind,
**und dass eine Eingabe zur Steuerung des Dienstes durch Betätigung wenigstens einer Taste (8, 10) der Eingabeeinrichtung (6, 8, 10) vornehmbar ist und die Taste (8, 10) der Eingabeeinrichtung (6, 8, 10) zur optischen Wiedergabe der zur Verfügung stehenden Eingabemöglichkeiten seitens der Anzeigeeinrichtung (4, 10) und/oder seitens der Eingabeeinrichtung (6, 8) optisch wiedergebbar ist.**

8. Endgerät (1) nach Anspruch **7, dadurch gekennzeichnet, dass** die zur Steuerung des Dienstes zur Verfügung stehenden Eingabemöglichkeiten diesem über das Telekommunikationsnetz mitteilbar und entsprechend seitens der Anzeigeeinrichtung (4, 10) und/oder seitens der Eingabeeinrichtung (6, 8) wiedergebbar sind.

9. Endgerät (1) nach Anspruch **8, dadurch gekennzeichnet, dass** die zur Steuerung des Dienstes zur Verfügung stehenden Eingabemöglichkeiten diesem in Form von Informationen zur Steuerung der Anzeigeeinrichtung (4, 10) und/oder zur Steuerung der Eingabeeinrichtung (6, 8) oder in Form von zur Steuerung der Anzeigeeinrichtung (4, 10) und/oder zur Steuerung der Eingabeeinrichtung (6, 8) nutzbaren und/oder umsetzbaren Informationen mitteilbar sind.

10. Endgerät (1) nach einem der Ansprüche **7** bis **9, dadurch gekennzeichnet, dass** die Steuerung des Dienstes mittels eines Mehrfrequenzwahlverfahrens ("MFV") erfolgt.

11. Endgerät (1) nach einem der Ansprüche **7** bis **10, dadurch gekennzeichnet, dass** dieses zur Ausführung eines Verfahrens nach einem der Ansprüche 1 bis **6** ausgebildet ist.

## Claims

1. A method for operating a mobile terminal (1) which is usable in a telecommunication network and which comprises a display device (4, 5, 9, 10) for the optical and/or acoustic reproduction of information and at least one input device (6, 7, 8, 10) for gathering information, wherein services provided via the telecommunication network can be controlled by means of inputs carried out by the input device (6, 7, 8, 10),
**characterized in**
**that** input options which are available for controlling a service will be optically reproduced by means of the display device (4, 10) of the terminal (1) and/or by means of the input device (6, 8) of the terminal (1),
and **that** an input for controlling the service is made by pressing at least one key (8, 10) of the input device (6, 8, 10) of the terminal (1) and the key (8, 10) of the input device (6, 8, 10) of the terminal (1) will be optically reproduced for the optical reproduction of the available input options by means of the display device (4, 10) of the terminal (1) and/or by means of the input device (6, 8) of the terminal (1).

2. A method according to claim 1, **characterized in that** the input options that are available for controlling the service will be communicated to the terminal (1) via the telecommunication network and will be reproduced correspondingly by means of the display device (4, 10) of the terminal (1) and/or by means of the input device (6, 8) of the terminal (1).

3. A method according to claim 2, **characterized in that** the input options that are available for controlling the service will be communicated to the terminal (1) in form of information for controlling the display device (4, 10) of the terminal (1) and/or for controlling the input device (6, 8) of the terminal (1) and/or in form of information that can be used and/or realized for controlling the display device (4, 10) of the terminal (1) and/or the input device (6, 8) of the terminal (1).

4. A method according to one of the claims 1 to 3, **characterized in that** the service is controlled by means of a dual-tone multi-frequency method ("MFV").

5. A method according to one of the claims 1 to 4, **characterized in that** the service is designed as one using a speech dialog system ("IVR").

6. A method according to one of the claims 1 to 5, **characterized in that** the service is a service for using and/or administrating voice messages.

7. A mobile terminal (1) for the use in a telecommunication network, comprising a display device (4, 5, 10) for the optical and/or acoustic reproduction of information and at least one input device (6, 7, 8, 10) for gathering information, wherein services provided via the telecommunication network can be controlled by means of inputs carried out by the input device (6, 7, 8, 10),
**characterized in**
**that** input options which are available for controlling a service can be optically reproduced by means of the display device (4, 10) and/or by means of the input device (6, 8),
and **that** an input for controlling the service can be made by pressing at least one key (8, 10) of the input device (6, 8, 10) and the key (8, 10) of the input device (6, 8, 10) can be optically reproduced for the optical reproduction of the available input options by means of the display device (4, 10) and/or by means of the input device (6, 8).

8. A terminal (1) according to claim 7, **characterized in that** the input options available for controlling the service can be communicated to this one via the telecommunication network and can be reproduced correspondingly by means of the display device (4, 10) and/or by means of the input device (6, 8).

9. A terminal (1) according to claim 8, **characterized in that** the input options that are available for controlling the service can be communicated to this one in form of information for controlling the display device (4, 10) and/or for controlling the input device (6, 8) and/or in form of information that can be used and/or realized for controlling the display device (4, 10) and/or for controlling the input device (6, 8).

10. A terminal (1) according to one of the claims 7 to 9, **characterized in that** the service is controlled by means of a multi-frequency selection method ("MFV").

11. A terminal (1) according to one of the claims 7 to 10, **characterized in that** this one is designed for carrying out a method according to one of the claims 1 to 6.

## Revendications

1. Procédé de fonctionnement d'un terminal mobile (1), qui est utilisable dans un réseau de télécommunication et qui comprend un dispositif d'affichage (4, 5, 9, 10) pour la reproduction optique et/ou acoustique d'informations et au moins un dispositif d'entrée (6, 7, 8, 10) pour saisir des informations, dans lequel des services fournis via le réseau de télécommunication peuvent être commandés par moyen des entrées faites par le dispositif d'entrée (6, 7, 8, 10),
**caractérisé en ce**
**que** des options d'entrée disponibles pour commander un service sont reproduites de manière optique par moyen du dispositif d'affichage (4, 10) du terminal (1) et/ou par moyen du dispositif d'entrée (6, 8) du terminal (1),
et **qu'**une entrée pour commander le service est faite en appuyant sur au moins une touche (8, 10) du dispositif d'entrée (6, 8, 10) du terminal (1) et que la touche (8, 10) du dispositif d'entrée (6, 8, 10) du terminal (1) est reproduite de manière optique pour la reproduction optique des options d'entrée disponibles par moyen du dispositif d'affichage (4, 10) du terminal (1) et/ou par moyen du dispositif d'entrée (6, 8) du terminal (1).

2. Procédé selon la revendication 1, **caractérisé en ce que** les options d'entrée disponibles pour commander le service sont communiquées au terminal (1) via le réseau de télécommunication et sont reproduites de manière correspondante par le dispositif d'affichage (4, 10) du terminal (1) et/ou par le dispositif d'entrée (6, 8) du terminal (1).

3. Procédé selon la revendication 2, **caractérisé en ce que** les options d'entrée disponibles pour commander le service sont communiquées au terminal (1) en forme d'informations pour commander le dispositif d'affichage (4, 10) du terminal (1) et/ou pour commander le dispositif d'entrée (6, 8) du terminal (1) ou en forme d'informations utilisables et/ou réalisables pour commander le dispositif d'affichage (4, 10) du terminal (1) et/ou pour commander le dispositif d'entrée (6, 8) du terminal (1).

4. Procédé selon l'une des revendications 1 à 3, **caractérisé en ce que** le service est commandé à l'aide d'un code DTMF (« MFV »).

5. Procédé selon l'une des revendications 1 à 4, **caractérisé en ce que** le service est configuré comme un service, qui utilise un système de dialogue vocal (« IVR »).

6. Procédé selon l'une des revendications 1 à 5, **caractérisé en ce que** le service est un service pour utiliser et/ou gérer des messages vocaux.

7. Terminal mobile (1) destiné à l'utilisation dans un réseau de télécommunication et comprenant un dispositif d'affichage (4, 5, 10) pour la reproduction optique et/ou acoustique d'informations et au moins un dispositif d'entrée (6, 7, 8, 10) pour saisir des informations, dans lequel des services fournis via le réseau de télécommunication peuvent être commandés par moyen des entrées faites par le dispositif d'entrée (6, 7, 8, 10),
**caractérisé en ce**
**que** des options d'entrée disponibles pour commander un service peuvent être reproduites de manière optique par moyen du dispositif d'affichage (4, 10) et/ou par moyen du dispositif d'entrée (6, 8),
et **qu'**une entrée pour commander le service peut être faite en appuyant sur au moins une touche (8, 10) du dispositif d'entrée (6, 8, 10) et que la touche (8, 10) du dispositif d'entrée (6, 8, 10) peut être reproduite de manière optique pour la reproduction optique des options d'entrée disponibles par moyen du dispositif d'affichage (4, 10) et/ou par moyen du dispositif d'entrée (6, 8).

8. Terminal (1) selon la revendication 7, **caractérisé en ce que** les options d'entrée disponibles pour commander le service peuvent être communiquées à celui-ci via le réseau de télécommunication et peuvent être reproduites de manière correspondante par le dispositif d'affichage (4, 10) et/ou par le dispositif d'entrée (6, 8).

9. Terminal (1) selon la revendication 8, **caractérisé en ce que** les options d'entrée disponibles pour commander le service peuvent être communiquées à celui-ci en forme d'informations pour commander le dispositif d'affichage (4, 10) et/ou pour commander le dispositif d'entrée (6, 8) ou en forme d'informations utilisables et/ou réalisables pour commander le dispositif d'affichage (4, 10) et/ou pour commander le dispositif d'entrée (6, 8).

10. Terminal (1) selon l'une des revendications 7 à 9, **caractérisé en ce que** le service est commandé à l'aide d'un code DTMF (« MFV »).

11. Terminal (1) selon l'une des revendications 7 à 10, **caractérisé en ce que** celui-ci est configuré pour effectuer un procédé selon l'une des revendications 1 à 6.
